# EUROPÄISCHE PATENTANMELDUNG

(11) **EP 3 895 878 A1**
(43) Veröffentlichungstag der Anmeldung: **20.10.2021**
(21) Anmeldenummer: 21160137.2
(22) Anmeldetag: 02.03.2021
(51) Int. Cl.: B29C 65/22, B29C 65/78, B29C 65/18

(54) **VERPACKUNGSMASCHINE MIT SCHMELZPUNKTERFASSUNG UND VERFAHREN DAFÜR**

(30) Priorität: 15.04.2020 DE 102020204752
(71) Anmelder: MULTIVAC Sepp Haggenmüller SE & Co. KG, 87787 Wolfertschwenden (DE)
(72) Erfinder: RENNER, Ingo, 87435 Kempten (DE); CLEMENS, Stephen, 87435 Kempten (DE); NAPRAVNIK, Christian, 83026 Rosenheim (DE)
(74) Vertreter: Grünecker Patent- und Rechtsanwälte PartG mbB

(57) **Zusammenfassung**

Verpackungsmaschine (100), umfassend eine Siegeleinrichtung (15), die zum Herstellen einer Siegelnaht (S) zum stoffschlüssigen Verbinden von Verpackungsmaterialien konfiguriert ist und die mindestens ein Heizelement (18) mit variierbarer Heizleistung aufweist, eine Erfassungseinheit (23), die mindestens einen dem Heizelement (18) zugeordneten Sensor (24) umfasst, sowie eine mit der Erfassungseinheit (23) verbundene Steuervorrichtung (19), die einen Regler (35) aufweist, der dazu konfiguriert ist, zumindest temporär während eines Phasenübergangs (33) beim Schmelzen der Verpackungsmaterialien (8, 10) eine Energiezufuhr des Heizelements (18) dynamisch anzupassen, wobei die Steuervorrichtung (19) dazu ausgebildet ist, selbststeuernd eine pro Siegelarbeitstakt ermittelte Führungsgröße (F) dem Regler (35) vorzuhalten, die einem während einer Durchführung des Siegelarbeitstakts erfassten, trotz einer am Heizelement (18) anhaltenden Energiezufuhr, zumindest temporär gleichbleibenden Temperaturwert (Ts) entspricht. Die Erfindung betrifft auch ein Verfahren zum Durchführen eines Siegelarbeitstakts zum stoffschlüssigen Verbinden von Verpackungsmaterialien.

## Beschreibung

Die Erfindung bezieht sich auf eine Verpackungsmaschine gemäß dem Oberbegriff des Anspruchs 1. Ferner betrifft die Erfindung ein Verfahren gemäß dem Oberbegriff des Anspruchs 11.

Verpackungsmaschinen werden in der Praxis dafür eingesetzt, Verpackungsfolien stoffschlüssig miteinander zu verbinden, um darin aufgenommene Produkte vorzugsweise luftdicht einzuschließen. Zur Herstellung eines stoffschlüssigen Verbunds werden die Verpackungsfolien miteinander verschweißt. Dabei werden zwischen den Verpackungsfolien atomare und molekulare Verbindungen erzeugt, die insbesondere während eines Phasenübergangs von fest nach flüssig sowie durch ein anschließendes Abkühlen der Verpackungsfolien verfestigen. Das stoffschlüssige Verbinden von Verpackungsfolien soll gezielt entlang einer Siegelnaht geschehen, die sich mittels einer an Verpackungsmaschinen vorgesehenen Siegeleinrichtung herstellen lässt. Die Herstellung einer einwandfreien Siegelnaht erfordert einen in technischer Hinsicht anspruchsvollen, präzise gesteuerten Siegelvorgang, der von verschiedenen Prozessparametern, beispielsweise einer Siegeltemperatur, des vorliegenden Drucks, der Luftfeuchtigkeit und anderen Prozesseinflussgrößen, abhängt. Störgrößen sind schwer zu erfassen.

Problematisch ist es, wenn während eines Siegelvorgangs variierende Einflussgrößen vorliegen, weil dadurch die Herstellung einer homogenen, d.h. qualitativ gleichbleibenden, Siegelnaht schwer realisierbar ist. Dieses Problem lässt sich schwer umgehen, da sich umgebungsbedingte und/oder materialbezogene Prozessparameter ändern können. Vor allen Dingen kann eine während des Siegelprozesses unkontrolliert gesteuerte Siegeltemperatur, insbesondere während eines Phasenübergangs von fest nach flüssig, dazu führen, dass die eingesetzten Verpackungsfolien bereichsweise inhomogen miteinander verschweißt, sogar abschnittsweise zerstört werden.

DE 197 37 471 C2 versucht diese technische Problematik dadurch zu lösen, dass während eines Verschmelzens der Verpackungsfolien, d.h. während deren Schweißzeit, eine dafür benötigte Temperatur gemäß einem voreingestellten Temperaturverlauf konstant eingeregelt wird. Dafür wird als Istwert der sich in Abhängigkeit von einer momentanen Heizleitertemperatur ändernde elektrische Widerstand des Heizleiters gemessen und mit einem voreingestellten, sollwertigen Temperaturniveau, d.h. einem dementsprechenden Widerstandswert, verglichen wird, worauf basierend der Regler arbeitet. Die sollwertigen Prozessparameter werden für den Regler voreingestellt, um diesbezüglich intermittierend fixiert den Regelungsprozess zu steuern. Hierfür kann beim Maschinenstart vom Bediener eine Solltemperatur bzw. ein Sollwiderstand für den Schmelzvorgang in der Steuerung als festeingestellte Führungsgröße hinterlegt werden.

Eine impulsgesteuerte Siegeleinrichtung ist aus der DE 198 15 763 C2 bekannt, wobei der während einer Abkühlphase eingesetzte Heizimpuls zur Verringerung einer Haftkraft der verschweißten Folien am Siegelwerkzeug dient.

Aufgabe der Erfindung ist es, eine Verpackungsmaschine sowie ein Verfahren zur Verfügung zu stellen, wodurch die Herstellung einer Siegelnaht verbessert wird.

Diese Aufgabe wird gelöst durch eine Verpackungsmaschine mit den Merkmalen des Anspruchs 1 sowie anhand eines Verfahrens mit den Merkmalen des Anspruchs 11. Vorteilhafte Weiterbildungen der Erfindung sind in den abhängigen Ansprüchen angegeben.

Die erfindungsgemäße Verpackungsmaschine umfasst eine Siegeleinrichtung, die zum Herstellen einer Siegelnaht zum stoffschlüssigen Verbinden von Verpackungsmaterialien konfiguriert ist und die mindestens ein Heizelement mit variierbarer Heizleistung aufweist. Ferner umfasst die Verpackungsmaschine eine Erfassungseinheit, die mindestens einen dem Heizelement zugeordneten Sensor umfasst, sowie eine mit der Erfassungseinheit verbundene Steuervorrichtung, die einen Regler aufweist, der dazu konfiguriert ist, zumindest temporär während eines Phasenübergangs beim Schmelzen der Verpackungsmaterialien eine Energiezufuhr des Heizelements dynamisch anzupassen.

Erfindungsgemäß ist die Steuervorrichtung dazu ausgebildet, selbststeuernd eine pro Siegelarbeitstakt ermittelte Führungsgröße dem Regler vorzuhalten, die einem während einer Durchführung des Siegelarbeitstakts erfassten, trotz einer am Heizelement anhaltenden Energiezufuhr, zumindest temporär gleichbleibenden Temperaturwert entspricht. Der gleichbleibende Temperaturwert kommt aufgrund der im verschmelzenden Verpackungsmaterial aufgenommenen Schmelzenthalpie zustande. Pro Siegelarbeitstakt, d.h. für jeden Phasenübergang, wird die Reglerführungsgröße selbststeuernd neu auf den für den Phasenübergang benötigten, am Beginn des Phasenübergangs gemessenen zumindest temporär gleichbleibenden Temperaturwert eingestellt, um damit den Phasenübergang eines jeden Siegelarbeitstakts optimal zu steuern. Der Siegelprozess ist damit zu jeder Zeit während des Einsatzes der Verpackungsmaschine, ohne Bedienereingriff, dynamisch anpassbar.

Zweckmäßig ist es, wenn der Sensor zum Messen einer Temperatur, eines elektrischen Widerstands und/oder einer elektrischen Kapazität des Heizelements ausgebildet ist. Vorteilhaft ist, wenn der Sensor die jeweiligen Messwerte kontinuierlich erfassen kann, damit die Steuerung zur Herstellung der Führungsgröße in Echtzeit darauf Zugriff hat. Somit kann präzise zu Beginn des Phasenübergangs die Führungsgröße aktualisiert werden.

Besonders präzise kann die beim Phasenübergang der Verpackungsmaterialien von fest nach flüssig vorliegende Schmelztemperatur anhand eines Sensors erfasst werden, der direkt am Heizelement angeordnet ist. Das Heizelement dient vorzugsweise zur Erwärmung eines daran zumindest zeitweise in Kontakt anliegenden Siegelwerkzeugs oder kann selbst als Siegelwerkzeug funktionieren, das die Verpackungsfolien während eines Siegelarbeitstakts zusammendrückt.

Vorzugsweise ist der Sensor ein Temperatursensor, der in horizontaler Projektionsebene zumindest teilweise innerhalb eines Bereichs der Siegelnaht liegt. Damit kann ein unmittelbar in der Nähe der Siegelnaht während des Siegelarbeitstakts, insbesondere ein beim Phasenübergang vorliegender Temperaturverlauf präzise erfasst werden.

Eine Variante sieht vor, dass der Sensor auf einer den Verpackungsmaterialien zugewandten oder abgewandten Seite des Heizelements befestigt ist. Damit kommt die eingesetzte Sensorik in unmittelbarer Nähe der zu überwachenden Siegelnahtherstellung zum Einsatz.

Für einen kompakten Aufbau kann es vorteilhaft sein, wenn der Sensor innerhalb einer Aufnahme des Heizelements zumindest teilweise eingebettet ist. Dafür könnte das Heizelement als Aufnahme für den Sensor eine Vertiefung aufweisen. Damit kann eine am Heizelement anliegende Temperatur noch besser erfasst werden, um den Siegelprozess während des Phasenübergangs zu kontrollieren. Hier kann das Heizelement die eingesetzte Sensorik integral aufnehmen.

Vorzugsweise ist der Sensor, insbesondere der Temperatursensor, innerhalb einer Sensorschicht angeordnet, die auf einer den Verpackungsmaterialien zugewandten Seite des Heizelements positioniert ist. Damit kann zur Siegeltemperaturerfassung ein Wärmestrom vom Heizelement zu den Verpackungsmaterialien durch den Sensor hindurchgeleitet werden. Vorstellbar ist es, dass der Sensor derart innerhalb der Sensorschicht angeordnet ist, dass eine den Verpackungsmaterialien zugewandte Seite des Sensors mit einer den Verpackungsmaterialien zugewandten Seite der Sensorschicht fluchtet, d.h. innerhalb einer gemeinsamen Ebene liegt. Damit kann der Sensor direkt gegen die Verpackungsmaterialien angedrückt werden. Zumindest ist der Sensor damit in unmittelbarer Nähe zur herzustellenden Siegelnaht positioniert.

Eine Variante sieht vor, dass die Erfassungseinheit mindestens einen Drucksensor aufweist. Der Drucksensor kann beispielsweise in der Sensorschicht positioniert sein, vorzugsweise neben einem darin angeordneten Temperatursensor. Der Drucksensor ist insbesondere dazu konfiguriert, einen Siegeldruckverlauf während eines Siegelprozesses zu erfassen.

Vorstellbar ist es, dass der Drucksensor während des Siegelprozesses einen Druckverlaufsabfall erfasst, indem die Verpackungsmaterialien miteinander verschmelzen. Der vom Drucksensor erfasste Druckabfall kann pro Siegelarbeitstakt an die Steuervorrichtung übermittelt und/oder von dieser als Ist-Messwert dem Regler zugeführt werden, welcher basierend auf einem Vergleich mit einem dem Regler vorgehaltenen Soll-Messwert den anliegenden Siegeldruck, beispielsweise durch eine geregelte Energiezufuhr eines Verstellantriebs eines Hubwerks der Siegeleinrichtung, anpasst.

Die Steuervorrichtung ist vorzugsweise dazu ausgebildet, selbststeuernd eine pro Siegelarbeitstakt angepasste weitere Führungsgröße, d.h. einen von der Maschine selbststeuernd an den laufenden Betrieb anpassbaren Soll-Messwert, dem Regler vorzuhalten, die auf mindestens einem während einer Durchführung des Siegelarbeitstakts erfassten Druckabfallmesswert zum Zeitpunkt der Schmelzpunkterfassung der Verpackungsmaterialen basiert. Somit lässt sich der Siegeldruck während des laufenden Betriebs der Verpackungsmaschine von selbst optimal einstellen.

Vorteilhaft ist es, wenn die Temperaturerfassungseinheit gleich mehrere Sensoren aufweist, die am Heizelement angeordnet sind. Vorzugsweise verteilen sich die Sensoren entlang des Heizelements entsprechend eines Verlaufs der herzustellenden Siegelnaht. Damit ließe sich die Temperaturerfassung hinsichtlich einer Geometrie der Siegelnaht noch besser durchführen.

Eine Variante sieht vor, dass pro Dezimeter, insbesondere pro Zentimeter, einer Siegelnahtlängserstreckung mindestens ein Sensor vorgesehen ist. Vorteilhaft ist es, wenn auf beiden Seiten der zu versiegelnden Verpackungsmaterialien in symmetrischer Anordnung Sensoren an der Siegeleinrichtung vorliegen.

Vorzugsweise ist der Sensor einer Siegelfläche des Heizelements zugeordnet. Vorstellbar ist es, dass eine Oberfläche des Sensors und die Siegelfläche des Heizelements in einer gemeinsamen Ebene liegen. Vorstellbar ist es, dass mehrere Sensoren entlang der Siegelfläche im Verlauf der herzustellenden Siegelnaht im Heizelement eingebaut sind.

Für einen hygienischen Betrieb kann das Heizelement, insbesondere das Heizelement zusammen mit dem daran vorgesehenen Sensor, mit einer Schutzschicht bzw. einer Hygieneschicht zumindest teilweise bedeckt sein.

Eine vorteilhafte Ausführungsform sieht vor, dass die Erfassungseinheit mindestens ein Paar vertikal beabstandete Sensoren aufweist, um einen während des Siegelarbeitstakts dazwischen, durch die Verpackungsfolien hindurchfließenden Wärmestrom zu erfassen. Die dabei zwischen jeweiligen Sensorpaaren einstellbare Wärmeleitung kann direkt durch die Siegelnaht geführt sein, um darin den Temperaturverlauf präzise zu erfassen.

Gegebenenfalls könnte die Wärmeleitung zwischen benachbarten Sensorpaaren isoliert sein, um eine stellenweise Temperaturerfassung an der Siegelnaht noch präziser zu ermöglichen. In diesem Zusammenhang wäre es vorstellbar, dass das Heizelement mehrere zueinander variabel beheizbare Heizzonen aufweist, deren jeweilige Phasenübergangstemperaturregelung gesondert steuerbar ist.

Eine praktische Lösung sieht vor, dass das Heizelement und der Sensor zusammen ein lösbar befestigtes Modul der Siegeleinrichtung ausbilden. Vorstellbar wäre es, dass das Heizelement und der Sensor in Form einer integralen Funktionseinheit, beispielsweise für Servicezwecke, gemeinsam und ggf. werkzeuglos von der Siegeleinrichtung abbaubar sind und auf diese Weise schnell ausgewechselt werden können.

Zur Bearbeitung verschiedener Verpackungsmaterialien, insbesondere zur Herstellung verschiedener Siegelnahtgeometrien, kann es vorteilhaft sein, wenn verschiedene Heizelement-Sensor-Module an der Siegeleinrichtung einsetzbar sind.

Vorzugsweise ist die Verpackungsmaschine in Form einer Tiefziehverpackungsmaschine, eines Traysealers oder einer Vakuumverpackungsmaschine ausgebildet. Die jeweiligen darin ablaufenden Siegelarbeitstakte können somit optimal an deren jeweilige Phasenübergangstemperatur angepasst werden.

Das erfindungsgemäße Verfahren führt einen Siegelarbeitstakt zum stoffschlüssigen Verbinden von einer Siegeleinrichtung einer Verpackungsmaschine zugeführten Verpackungsmaterialien entlang einer Siegelnaht durch, wobei während des Siegelarbeitstakts ein Regler der Verpackungsmaschine zumindest temporär eine Energiezufuhr eines Heizelements der Siegeleinrichtung dynamisch anpasst. Erfindungsgemäß ermittelt dabei eine dem Heizelement zugeordnete Erfassungseinheit während des Siegelarbeitstakts einen Temperaturwert, der zumindest temporär, trotz einer am Heizelement anhaltenden Energiezufuhr konstant bleibt. Weiter erfindungsgemäß hält eine mit der Erfassungseinheit verbundene Steuervorrichtung den Temperaturwert als Führungsgröße dem Regler zum Anpassen der Energiezufuhr des Heizelements während eines Phasenübergangs zum Schmelzen der Verpackungsmaterialien für eine vorbestimmte Zeit vor.

Somit lässt sich pro Siegelarbeitstakt, d.h. intermittierend während des Herstellungsprozesses, der Phasenübergang zum Verschmelzen der Verpackungsmaterialien erfassen, wobei anhand der erfassten Schmelztemperatur die Führungsgröße für den Regler angepasst und damit die Energiezufuhr am Heizelement gesteuert wird. Über den gesamten Verpackungsprozess lässt sich dadurch an der Verpackungsmaschine die Herstellung einer homogenen, gleichbleibenden Siegelnaht verbessern.

Besonders präzise lässt sich der Temperaturverlauf, insbesondere der konstante Temperaturwert während des Phasenübergangs bei latenter Wärmezufuhr, mittels eines direkt am Heizelement angeordneten Sensors der Erfassungseinheit ermitteln.

Vorteilhaft ist es, wenn der konstante Temperaturwert mittels eines in horizontaler Projektionsebene zumindest teilweise innerhalb eines Bereichs der Siegelnaht liegenden Temperatursensors der Erfassungseinheit erfasst wird. Damit lässt sich der Temperaturverlauf, insbesondere der während des Phasenübergangs gleichbleibende Temperaturwert, in Nähe der Siegelnaht reaktionsschnell erfassen. Damit lassen sich außerhalb dieser Zone auftretende Temperatureinflussgrößen hervorragend isolieren.

Eine Variante sieht vor, dass gleich mehrere Sensoren am Heizelement zur Temperaturmessung während des Siegelarbeitstakts eingesetzt werden. Damit lässt sich ein Aufwärm- sowie Abkühlverhalten des Heizelements pro Siegelarbeitstakt genau erfassen, worauf basierend eine dynamisch angepasste Bestromung des Heizelements, vor allem während des Phasenübergangs, steuerbar ist.

Eine vorteilhafte Ausführungsform sieht vor, dass während des Siegelarbeitstakts am Heizelement bis zum Erfassen des konstanten Temperaturwerts eine konstante Energiezufuhr stattfindet und eine dynamische Anpassung der Energiezufuhr gleichzeitig mit dem Erfassen des konstanten Temperaturwerts beginnt.

Vorstellbar ist es, dass mehrere an der Siegeleinrichtung angeordnete, vertikal beabstandete Sensoren jeweilige Sensorpaare ausbilden. Die Sensoren der Sensorpaare sind auf gegenüberliegenden Seiten der Verpackungsfolien derart positioniert, dass sie einen durch die Siegelnaht geführten Wärmestrom erfassen können. Damit kann die Temperatur präzise innerhalb der Siegelnaht erfasst werden.

Vorzugsweise werden die zwischen benachbarten Sensorpaaren erzeugten Wärmeleitungen voneinander isoliert, um an verschiedenen Stellen der Siegelnaht eine zonenweise Schmelztemperaturerfassung durchzuführen. Diesbezüglich könnte mittels der Steuereinrichtung eine gemittelte Schmelztemperatur als Führungsgröße für den Regler gebildet werden. Alternativ dazu könnten die ggf. verschiedenen Schmelztemperaturen jeweils als Führungsgröße zum Regeln unabhängig voneinander steuerbarer Heizelementzonen eingesetzt werden.

Ausführungsformen der Erfindung werden anhand der folgenden Figuren genauer erläutert. Es zeigen:
- Fig. 1: eine Verpackungsmaschine in Form einer Tiefziehverpackungsmaschine,
- Fig. 2: eine Siegeleinrichtung in schematischer Darstellung sowie ein daraus vergrößerter Ausschnitt eines Sensorpaars,
- Fig. 3: ein Phasenübergangs- und Temperaturverlaufsdiagramm während eines Siegelarbeitstakts,
- Fig. 4: einen Traysealer, und
- Fig. 5: eine Vakuumverpackungsmaschine.

Gleiche Komponenten sind in den Figuren durchgängig mit gleichen Bezugszeichen versehen.

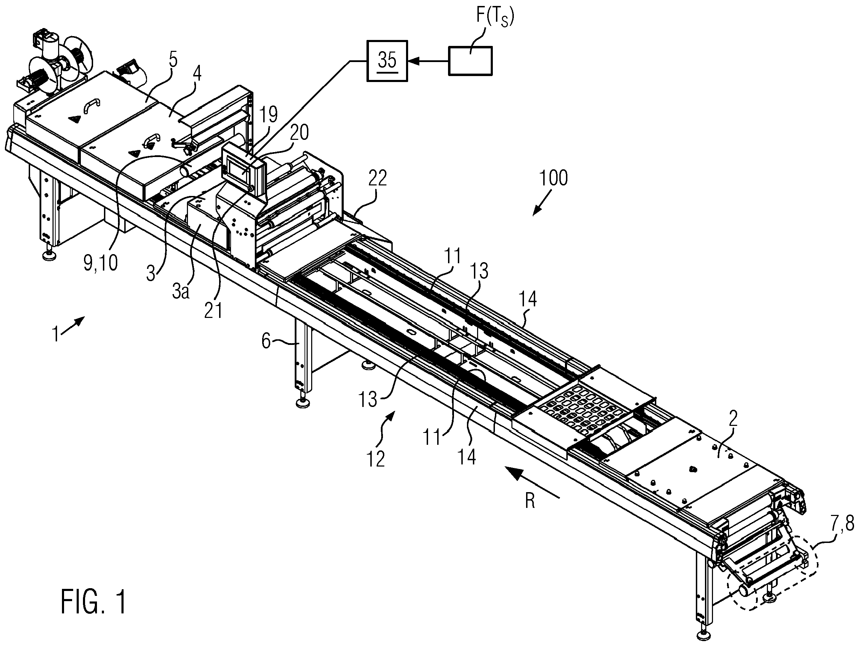

Figur 1 zeigt in perspektivischer Ansicht eine intermittierend arbeitende Verpackungsmaschine 100 in Form einer Tiefziehverpackungsmaschine 1. Die Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Transportrichtung R an einem Maschinengestell 6 angeordnet sind.

Eingangsseitig befindet sich an dem Maschinengestell 6 eine Zufuhrrolle 7, von der eine Unterfolie 8 abgezogen wird. Ferner weist die Tiefziehverpackungsmaschine 1 eine Transportkette 11 auf, die die Unterfolie 8 ergreift und diese pro Hauptarbeitstakt in der Transportrichtung R weitertransportiert, insbesondere beidseitig angeordnete Transportketten bzw. Klammerketten 11.

In der dargestellten Ausführungsform ist die Formstation 2 als eine Tiefziehstation ausgebildet, bei der in die Unterfolie 8 durch Tiefziehen, beispielsweise mittels Druckluft und/oder Vakuum, Mulden geformt werden. Dabei kann die Formstation 2 derart ausgebildet sein, dass in der Richtung senkrecht zur Transportrichtung R mehrere Mulden nebeneinander gebildet werden. In Transportrichtung R hinter der Formstation 2 ist eine Einfüllstrecke 12 vorgesehen, in der die in der Unterfolie 8 geformten Mulden mit Produkten befüllt werden.

Die Siegelstation 3 verfügt über eine hermetisch verschließbare Kammer 3a, in der die Atmosphäre in den Mulden vor dem Versiegeln mit der von einer Oberfolienaufnahme 9 abgegebenen Oberfolie 10, z.B. evakuiert und/oder durch Gasspülen, mit einem Austauschgas oder mit einem Gasgemisch ersetzt werden kann.

Die Querschneideeinrichtung 4 kann als Folienstanze ausgebildet sein, die die Unterfolie 8 und die Oberfolie 10 in einer Richtung quer zur Transportrichtung R zwischen benachbarten Mulden durchtrennt. Dabei arbeitet die Querschneideeinrichtung 4 derart, dass die Unterfolie 8 nicht über die gesamte Breite aufgetrennt wird, sondern zumindest in einem Randbereich nicht durchtrennt wird. Dies ermöglicht einen kontrollierten Weitertransport durch die Transportkette 11.

Die Längsschneideeinrichtung 5 kann als eine Messeranordnung ausgebildet sein, mit der die Unterfolie 8 und die Oberfolie 10 zwischen benachbarten Mulden und am seitlichen Rand der Unterfolie 8 in der Transportrichtung R durchtrennt werden, sodass hinter der Längsschneideeinrichtung 5 vereinzelte Verpackungen vorliegen.

Die rechten und linken Transportketten 11 der Tiefziehverpackungsmaschine 1, die die Unterfolie 8 eingangs und weiter stromabwärts zusammen mit der Oberfolie 8 beidseitig ergreifen können, werden jeweils in einer Kettenführung 13 geführt. Die Kettenführungen 13 sind nach außen hin jeweils von einer Seitenverkleidung 14 der Tiefziehverpackungsmaschine 1 geschützt und ggf. an der Seitenverkleidung 14 befestigt. Die Seitenverkleidung 14 kann ein Blechteil sein.

Die Tiefziehverpackungsmaschine 1 verfügt ferner über eine Steuervorrichtung 19. Sie hat die Aufgabe, die in der Tiefziehverpackungsmaschine 1 ablaufenden Prozesse zu steuern und zu überwachen. Eine Anzeigevorrichtung 20 mit Bedienelementen 21 dient zum Visualisieren bzw. Beeinflussen der Prozessabläufe in der Tiefziehverpackungsmaschine 1 für bzw. durch einen Bediener. Die Steuervorrichtung 19 umfasst einen Regler 35, an welchem eine Führungsgröße F dynamisch für einen Siegelprozess anpassbar ist.

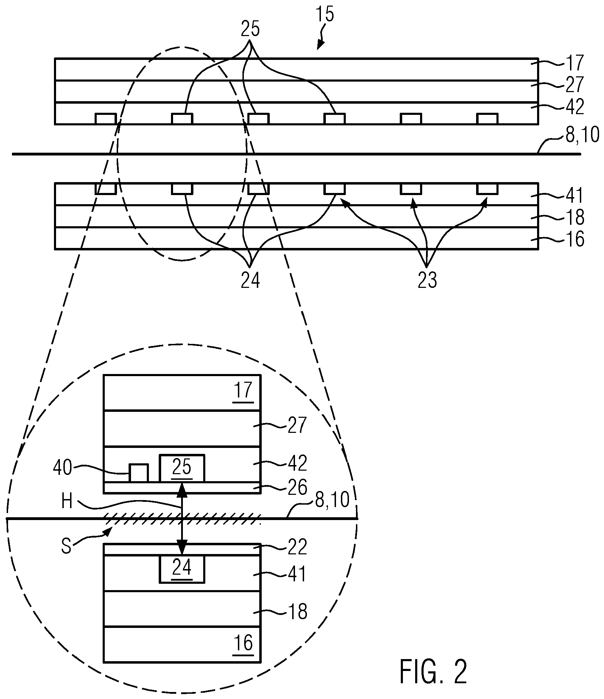

Figur 2 zeigt in schematischer Darstellung eine Siegeleinrichtung 15, die zum Herstellen einer Siegelnaht S zum stoffschlüssigen Verbinden von Verpackungsmaterialien, beispielsweise zum stoffschlüssigen Verbinden der Unterfolie 8 mit der Oberfolie 10, konfiguriert ist. Die Siegeleinrichtung 15 ist innerhalb der in Figur 1 gezeigten Siegelstation 3 gelagert, um pro Siegelarbeitstakt der Tiefziehverpackungsmaschine 1 die der Siegelstation 3 zugeführten Verpackungsmaterialien stoffschlüssig miteinander entlang der Siegelnaht S zu verbinden.

Figur 2 zeigt, dass die Siegeleinrichtung 15 einen unteren Grundkörper 16 und einen oberen Grundkörper 17 aufweist. Der untere und der obere Grundkörper 16, 17 sind relativ zueinander verstellbar gelagert. Damit lassen sich die beiden Grundkörper 16, 17 für einen Siegelarbeitstakt derart zusammenführen, dass dazwischen die Unterfolie 8 und die Oberfolie 10 eingeklemmt werden.

Auf dem unteren Grundkörper 16 ist ein Heizelement 18 und an einer Unterseite des oberen Grundkörpers 17 ist ein weiteres Heizelement 27 angeordnet. Die beiden Heizelemente 18, 27 können beispielsweise in Form einer Heizschiene, eines Heizbands und/oder eines Heizdrahts vorliegen. Außerdem ist in Figur 2 eine Erfassungseinheit 23 der Siegeleinrichtung 15 zu sehen. Die Erfassungseinheit 23 weist auf dem Heizelement 18 eine erste Sensorschicht 41 sowie darin eingebettete Sensoren 24, beispielsweise Temperatursensoren, auf. Die erste Sensorschicht 41 kann auf einer den Verpackungsmaterialien 8, 10 zugewandten Seite mit einer ersten Hygieneschicht 22, beispielsweise mit einem Hygienelack, bedeckt sein (siehe vergrößerter Ausschnitt der Figur 2), welche die Verpackungsmaterialien von der ersten Sensorschicht 41 trennt.

Die Siegeleinrichtung 15 aus Figur 2, insbesondere deren Erfassungseinheit 23, weist ferner eine zweite Sensorschicht 42 mit darin angeordneten Sensoren 25, insbesondere Temperatursensoren, auf. Die zweite Sensorschicht 42 kann auf einer den Verpackungsmaterialien 8, 10 zugewandten Seite mit einer zweiten Hygieneschicht 26, beispielsweise mit einem Hygienelack, bedeckt sein (siehe vergrößerter Ausschnitt der Figur 2), welche die Verpackungsmaterialien von der zweiten Sensorschicht 42 trennt.

Die Erfassungseinheit 23 verfügt über mehrere Sensoren 24, die oberhalb des Heizelements 18 in der ersten Sensorschicht 41 befestigt, horizontal verteilt sind. Ferner zeigt Figur 2, dass innerhalb der zweiten Sensorschicht 42 mehrere Sensoren 25 unterhalb des weiteren Heizelementes 27 horizontal verteilt angeordnet sind. Die weiteren Sensoren 25 sind gleichermaßen wie die darunter angeordneten Sensoren 24 zueinander positioniert, wobei sie in Figur 2 mit den Sensoren 24 jeweilige vertikale Sensorpaare bilden. Eines davon ist im vergrößerten Ausschnitt der Figur 2 gezeigt.

Anhand der jeweiligen Sensorpaare, vor allem angesichts der dazwischen vorliegenden Wärmeleitung, kann im Bereich der eingeklemmten Verpackungsmaterialien, insbesondere durch die hergestellte Siegelnaht S, ein Wärmestrom H erfasst werden.

Gemäß Figur 2 können damit an der Siegeleinrichtung 15 zwei übereinander angeordnete Heizelemente 18, 27 die dazwischen zugeführten Verpackungsfolien 8, 10 in einem Bereich der Siegelnaht S versiegeln. Gemäß Figur 2 sind die jeweiligen Sensoren 24, 25 innerhalb der ersten und der zweiten Sensorschicht 41, 42 eingebettet dargestellt. Vorstellbar wäre es, dass die jeweiligen Sensoren 24, 25 zumindest teilweise innerhalb der jeweiligen Heizelemente 18, 27 eingebettet angeordnet sind.

Gemäß Figur 2 liegen die jeweiligen Sensoren 24, 25 zwischen den übereinander angeordneten Heizelementen 18, 27, um eine Temperaturerfassung unmittelbar an den Verpackungsmaterialien zu ermöglichen. Gemäß Figur 2 können die jeweiligen Sensorpaare mit ihren den Verpackungsmaterialien 8, 10 zugewandten Seiten mit den den Verpackungsmaterialien 8, 10 zugewandten Seiten der ersten und der zweiten Sensorschicht 41, 42 fluchtend ausgebildet sein, d.h. innerhalb gemeinsamen Ebenen liegen.

Weiter wird im vergrößerten Ausschnitt der Figur 2 ein Drucksensor 40 gezeigt. Wie in Figur 2 dargestellt kann der Drucksensor 40 innerhalb der zweiten Sensorschicht 42 neben einem Sensor 25 positioniert sein. Der Drucksensor 40 kann auch innerhalb der ersten Sensorschicht 41 neben dem Sensor 24 positioniert sein. Ebenfalls können mehrere Drucksensoren 40 vorliegen, wobei einem Sensorpaar jeweils ein Drucksensor 40 zugeordnet ist.

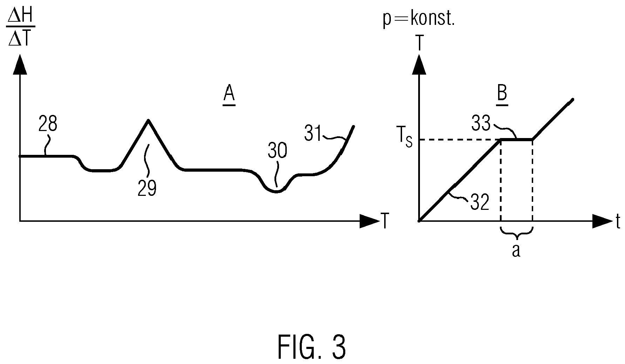

Figur 3 zeigt in einem linken Diagramm A einen Wärmestromverlauf 28, der eine Enthalpieänderung darstellt. Der Wärmestromverlauf 28 ändert sich hinsichtlich einer Referenz. Hier weist der Wärmestromverlauf 28 in einem Bereich 29 eine Rekristallisationswärme auf, die beim Erhitzen des Heizelements 18 durch freiwerdende Wärme aufgrund einer Kristallneuanordnung innerhalb der Bauteilstruktur zustande kommt. Ferner zeigt der Wärmestromverlauf 28, dass im Bereich einer erfassten Schmelzwärme 30 der Wärmestrom durch das Heizelement 18 einbricht, bis der Phasenübergang vollständig innerhalb der Verpackungsmaterialien stattgefunden hat.

Figur 3 zeigt des Weiteren, dass im Wärmestromverlauf 28 nach dem Bereich der erfassten Schmelzwärme 30 im anschließenden Abschnitt eine Zersetzungswärme 31 für die Verpackungsmaterialien anliegt, wodurch diese zerstört werden.

In einem rechten Diagramm B der Figur 3 ist die Temperaturänderung über der Zeit der während des Siegelarbeitstakts zu versiegelnden Verpackungsmaterialien bei konstanter Leistungszufuhr gezeigt. Ein Temperaturverlauf 32 deutet mittels eines Plateaus konstanter Temperatur T auf einen Phasenübergang 33 von fest nach flüssig hin, während welchem die Verpackungsfolien 8, 10 bei gleichbleibender Temperatur T miteinander verschmelzen. Der Phasenübergang 33 weist gemäß dem Diagramm B für die Dauer eines Zeitintervalls a einen konstanten Temperaturwert Ts auf, der erfindungsgemäß als Führungsgröße F für den Regler 35 pro Siegelarbeitstakt bestimmt und daran eingesetzt wird. Im Anschluss an den Phasenübergang 33 findet mit weiter ansteigender Temperatur T die Zersetzung der Verpackungsmaterialien 8, 10 statt. Der im Diagramm B gezeigte Temperaturverlauf 32 wurde unter adiabaten Bedingungen aufgenommen.

Die im Diagramm A gezeigte Schmelzwärme 30, welche im Bereich des Phasenübergangs 33 vorliegt, bedingt die an den Verpackungsfolien 8, 10 bzw. am Heizelement 18 erfassbare gleichbleibende Temperatur Ts, die als Führungsgröße F für den in Figur 1 gezeigten Regler 35 pro Siegelarbeitstakt anpassbar und einsetzbar ist, um den Schmelzvorgang daran angepasst zu regeln.

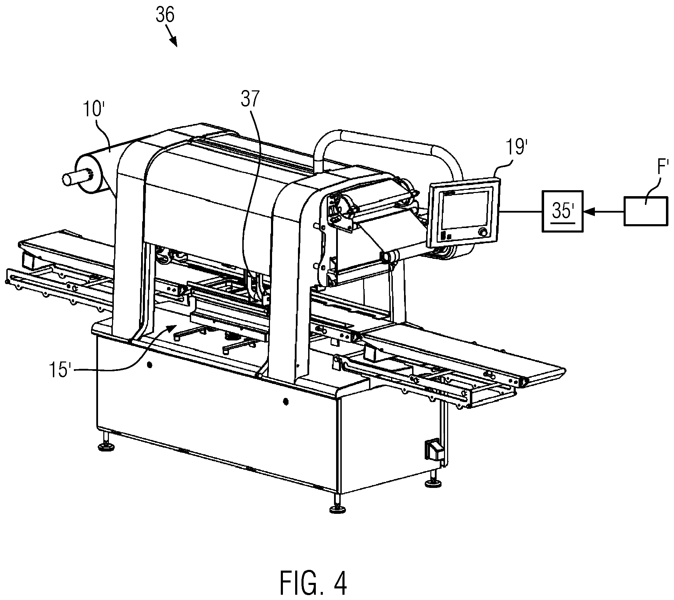

Figur 4 zeigt einen Traysealer 36 mit einer Siegeleinrichtung 15'. Der Siegeleinrichtung 15' liegt das erfindungsgemäße Prinzip zugrunde, wonach die Führungsgröße F' für den Regler 35' einer in Figur 4 gezeigten Steuervorrichtung 19' pro Siegelarbeitstakt angepasst werden kann, um in Anpassung daran dynamisch den Siegelarbeitstakt, insbesondere den Phasenübergang der Verpackungsmaterialien, auf einem optimalen Temperaturniveau Ts zu regeln. Der in Figur 4 gezeigte Traysealer 36 weist eine Greifereinrichtung 37 auf, mittels welcher dem Traysealer 36 zugeführte Verpackungsschalen ergriffen und in die Siegeleinrichtung 15' hineintransportiert werden können, damit diese mittels einer Oberfolie 10' versiegelt werden können.

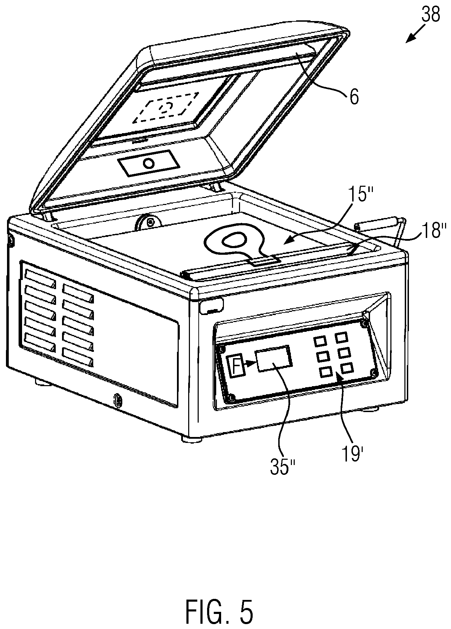

Figur 5 zeigt eine Vakuumverpackungsmaschine 38 mit einer Siegeleinrichtung 15", die ein Heizelement 18" mit anpassbarer Energiezufuhr aufweist. Die Vakuumverpackungsmaschine 38 verfügt ferner über eine Steuervorrichtung 19", die einen Regler 35" vorsieht, dessen Funktionsweise dynamisch auf Basis der änderbaren Führungsgröße F in Form des abgefassten Temperaturwerts Ts pro Siegelarbeitstakt änderbar ist.

Pro Siegelarbeitstakt, d.h. für jeden Phasenübergang, kann die Reglerführungsgröße F, F' selbststeuernd neu auf den für den Phasenübergang benötigten, am Beginn des Phasenübergangs gemessenen zumindest temporär gleichbleibenden Temperaturwert und/oder am Beginn des Phasenübergangs mittels des Drucksensors gemessenen Druckabfallwert eingestellt werden, um damit den Phasenübergang eines jeden Siegelarbeitstakts optimal zu steuern. Der Siegelprozess ist damit zu jeder Zeit während des Einsatzes der Verpackungsmaschine temperatur- und/oder druckgesteuert, ohne Bedienereingriff, dynamisch anpassbar.

## Patentansprüche

1. Verpackungsmaschine (100), umfassend eine Siegeleinrichtung (15), die zum Herstellen einer Siegelnaht (S) zum stoffschlüssigen Verbinden von Verpackungsmaterialien konfiguriert ist und die mindestens ein Heizelement (18) mit variierbarer Heizleistung aufweist, eine Erfassungseinheit (23), die mindestens einen dem Heizelement (18) zugeordneten Sensor (24) umfasst, sowie eine mit der Erfassungseinheit (23) verbundene Steuervorrichtung (19), die einen Regler (35) aufweist, der dazu konfiguriert ist, zumindest temporär während eines Phasenübergangs (33) beim Schmelzen der Verpackungsmaterialien (8, 10) eine Energiezufuhr des Heizelements (18) dynamisch anzupassen, **dadurch gekennzeichnet, dass** die Steuervorrichtung (19) dazu ausgebildet ist, selbststeuernd eine pro Siegelarbeitstakt ermittelte Führungsgröße (F) dem Regler (35) vorzuhalten, die einem während einer Durchführung des Siegelarbeitstakts erfassten, trotz einer am Heizelement (18) anhaltenden Energiezufuhr, zumindest temporär gleichbleibenden Temperaturwert (Ts) entspricht.

2. Verpackungsmaschine nach Anspruch 1, **dadurch gekennzeichnet, dass** der Sensor (24) zum Messen einer Temperatur, eines elektrischen Widerstands und/oder einer elektrischen Kapazität des Heizelements (18) ausgebildet ist.

3. Verpackungsmaschine nach Anspruch 1 oder 2, **dadurch gekennzeichnet, dass** der Sensor (24) direkt am Heizelement (18) angeordnet ist.

4. Verpackungsmaschine nach einem der vorangehenden Ansprüche, **dadurch gekennzeichnet, dass** der Sensor (24) ein Temperatursensor ist, der in horizontaler Projektionsebene zumindest teilweise innerhalb eines Bereichs der Siegelnaht (S) liegt.

5. Verpackungsmaschine nach einem der vorangehenden Ansprüche, **dadurch gekennzeichnet, dass** der Sensor (24) auf einer den Verpackungsmaterialien (8, 10) zugewandten oder abgewandten Seite des Heizelements (18) angeordnet ist.

6. Verpackungsmaschine nach einem der vorangehenden Ansprüche, **dadurch gekennzeichnet, dass** der Sensor (24) innerhalb einer Aufnahme des Heizelements (18) zumindest teilweise eingebettet ist.

7. Verpackungsmaschine nach einem der vorangehenden Ansprüche, **dadurch gekennzeichnet, dass** die Erfassungseinheit (23) mehrere Sensoren (24, 25) aufweist, die am Heizelement (18) angeordnet sind.

8. Verpackungsmaschine nach Anspruch 7, **dadurch gekennzeichnet, dass** die Erfassungseinheit (23) mindestens ein Paar vertikal beabstandete Sensoren (24, 25) aufweist, um einen während des Siegelarbeitstakts dazwischen vorliegen Wärmestrom (H) zu erfassen.

9. Verpackungsmaschine nach einem der vorangehenden Ansprüche, **dadurch gekennzeichnet, dass** das Heizelement (18) und der Sensor (24, 25) zusammen ein lösbar befestigtes Modul (M) der Siegeleinrichtung (15) ausbilden.

10. Verpackungsmaschine nach einem der vorangehenden Ansprüche, **dadurch gekennzeichnet, dass** die Verpackungsmaschine (100) in Form einer Tiefziehverpackungsmaschine (1), eines Traysealers (36) oder einer Vakuumverpackungsmaschine (38) vorliegt.

11. Verfahren zum Durchführen eines Siegelarbeitstakts zum stoffschlüssigen Verbinden von einer Siegeleinrichtung (15) einer Verpackungsmaschine (100) zugeführten Verpackungsmaterialen entlang einer Siegelnaht (S), wobei während des Siegelarbeitstakts ein Regler (35) der Verpackungsmaschine (100) zumindest temporär eine Energiezufuhr eines Heizelements (18) der Siegeleinrichtung (15) dynamisch anpasst, **dadurch gekennzeichnet, dass** eine dem Heizelement (18) zugeordnete Erfassungseinheit (23) während des Siegelarbeitstakts einen Temperaturwert (Ts) ermittelt, der zumindest temporär, trotz einer am Heizelement (18) anhaltenden Energiezufuhr, konstant bleibt, und dass eine mit der Erfassungseinheit (23) verbundene Steuervorrichtung (19) den Temperaturwert (Ts) als Führungsgröße (F) dem Regler (35) zum Anpassen der Energiezufuhr des Heizelements (18) während eines Phasenübergangs (33) zum Schmelzen der Verpackungsmaterialien (8, 10) für eine vorbestimmte Zeit vorhält.

12. Verfahren nach Anspruch 11, **dadurch gekennzeichnet, dass** der konstante Temperaturwert (T_{S}) mittels eines am Heizelement (18) angeordneten Sensors (24) der Erfassungseinheit erfasst (23) wird.

13. Verfahren nach Anspruch 11 oder 12, **dadurch gekennzeichnet, dass** der konstante Temperaturwert (Ts) mittels eines in horizontaler Projektionsebene zumindest teilweise innerhalb eines Bereichs der Siegelnaht (S) liegenden Temperatursensors der Erfassungseinheit (23) erfasst wird.

14. Verfahren nach einem der vorangehenden Ansprüche 11 bis 13, **dadurch gekennzeichnet, dass** mehrere Sensoren (24, 25) am Heizelement (18) zur Temperaturmessung während des Siegelarbeitstakts eingesetzt werden.

15. Verfahren nach einem der vorangehenden Ansprüche 11 bis 14, **dadurch gekennzeichnet, dass** während des Siegelarbeitstakts am Heizelement (18) bis zum Erfassen des konstanten Temperaturwerts eine konstante Energiezufuhr stattfindet und eine dynamische Anpassung der Energiezufuhr gleichzeitig mit dem Erfassen des konstanten Temperaturwerts (Ts) beginnt.
